(19) **Europäisches Patentamt**
**European Patent Office**
**Office européen des brevets**

(11) **EP 1 878 180 B1**

(12) **FASCICULE DE BREVET EUROPEEN**

(45) Date de publication et mention
de la délivrance du brevet:
**13.03.2013 Bulletin 2013/11**

(51) Int Cl.:
***H04L 12/70*** *(2013.01)*

(21) Numéro de dépôt: **06755432.9**

(22) Date de dépôt: **20.04.2006**

(86) Numéro de dépôt international:
**PCT/FR2006/000878**

(87) Numéro de publication internationale:
**WO 2006/117448 (09.11.2006 Gazette 2006/45)**

(54) **PROCEDE D'ORDONNANCEMENT DE PAQUETS APPARTENANT À DES FLOTS ET EQUIPEMENT ASSOCIÉ**

VERFAHREN ZUR EINTEILUNG EINES ZU FLÜSSEN GEHÖRENDEN PAKETS UND GERÄTE ZUM AUSFÜHREN DES VERFAHRENS

METHOD FOR SCHEDULING A PACKET BELONGING TO FLOWS AND EQUIPMENT FOR CARRYING OUT SAID METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **02.05.2005 FR 0504447**

(43) Date de publication de la demande:
**16.01.2008 Bulletin 2008/03**

(73) Titulaire: **FRANCE TELECOM**
**75015 Paris (FR)**

(72) Inventeurs:
• **ROBERTS, James**
**F-78960 Voisins Le Bretonneux (FR)**
• **KORTEBI, Abdesselem**
**F-92310 Sevres (FR)**
• **MUSCARIELLO, Luca**
**10129 Turin (IT)**

(74) Mandataire: **Cabinet Plasseraud**
**52, rue de la Victoire**
**75440 Paris Cedex 09 (FR)**

(56) Documents cités:
**EP-A- 1 478 140**

• **A. KORTEBI, S. OUESLATI AND J. ROBERTS: "Cross-protect: implicit service differentiation and admission control" IEEE HPSR 2004, avril 2004 (2004-04), XP002354320 Phoenix, USA**
• **A. KORTEBI,L. MUSCARIELLO, S. OUESLATI,J. ROBERTS: "On the Scalability of Fair Queueing" ACM HOTNETS-III, novembre 2004 (2004-11), XP002354321 SAN DIEGO, USA,**
• **BENNETT J C R ET AL: "High speed, scalable, and accurate implementation of packet fair queueing algorithms in ATM networks" NETWORK PROTOCOLS, 1997. PROCEEDINGS., 1997 INTERNATIONAL CONFERENCE ON ATLANTA, GA, USA 28-31 OCT. 1997, LOS ALAMITOS, CA, USA,IEEE COMPUT. SOC, US, 28 octobre 1997 (1997-10-28), pages 7-14, XP010258681 ISBN: 0-8186-8061-X**

**Description**

La présente invention concerne l'ordonnancement de paquets appartenant à des flots, en vue de leur délivrance sur un lien de réseau par exemple.

Un flot comprend une succession de paquets de données, tels que des datagrammes IP ("Internet Protocol") par exemple. Il est identifié par un ensemble d'attributs présents dans l'en-tête de chacun des paquets qui le composent. Ces attributs comprennent par exemple une adresse IP source, une adresse IP de destination, un port source, un port de destination, une identification de protocole, un identifiant de flot ("flow label"), etc. Ainsi, tous les paquets comportant les mêmes valeurs d'attributs constituent un flot.

Un flot est considéré comme étant en cours à un instant donné si le temps écoulé depuis l'observation de son dernier paquet est inférieur à un certain seuil TO, de l'ordre de quelques secondes par exemple.

Des mécanismes d'ordonnancement de paquets utilisant la notion de flot sont connus. Ils visent à établir un ordre dans la délivrance des paquets en sortie d'un routeur par exemple. Il existe en particulier une littérature abondante sur des algorithmes à partage équitable ("Fair Queuing"). Ces algorithmes assurent un certain niveau d'équité entre les flots lors de la délivrance des paquets. Parmi ceux-ci, on citera à titre illustratif le DRR ("Deficit Round Robin") qui a été décrit par Shreedar et Varghese dans "efficient fair queuing using Deficit Round Robin", IEEE/ACM Transactions on Networking, Volume: 4, Issue: 3, June 1996, Pages:375 - 385 et le SFQ ("Start-time Fair Queueing") qui a été décrit par Goyal, Vin et Cheng dans "Start-time fair queueing: A scheduling algorithm for integrated services packet switching networks". IEEE/ACM ToN, Vol 5, No 5, Octobre 1997.

Le DRR est un mécanisme d'ordonnancement de complexité réduite basé sur le traitement des flots de manière cyclique selon un principe de répartition à permutation circulaire ("round robin"). Une file d'attente est associée à chaque flot. Le flot i est autorisé à transmettre au plus un quantum $Q\_i$ fixe d'octets par cycle. Il obtient ainsi un débit proportionnel à la valeur de son quantum $Q\_i$. Ce mécanisme permet d'obtenir un degré d'équité raisonnable grâce au maintien d'un compteur de déficit qui compense la différence éventuelle de taille entre les paquets des différents flots. La complexité est d'ordre O(1), c'est-à-dire qu'elle est indépendante du nombre de flots en cours.

Le SFQ est un mécanisme faisant partie de la classe d'algorithme à partage équitable parfois appelée "self-clocked". L'ordonnancement des paquets à délivrer est défini par une estampille attribuée à chaque paquet. Le flot i est associé à un paramètre de débit $R\_i$ qui détermine le rapprochement entre les estampilles des paquets de ce flot.

Les flots, dans un réseau de paquets, sont de nature éphémère. Le nombre de flots en cours à chaque instant est une variable qui peut atteindre une valeur de plusieurs dizaines de milliers sur un lien de grande capacité (de 2,5 Gbps ou plus, par exemple). Cependant, le nombre de flots qui doivent être connus à chaque instant du mécanisme d'ordonnancement est considérablement plus faible. En effet, l'échéancier de délivrance des paquets établi par le mécanisme d'ordonnancement ne concerne que les flots, dits flots actifs, qui ont au moins un paquet en file d'attente en vue de sa délivrance à l'instant considéré ou, éventuellement, qui en ont eu dans un passé très récent. Ce fait rend réalisable l'ordonnancement à partage équitable même à des débits de lien très élevés, car le nombre de flots actifs est indépendant du débit du lien et se limite à quelques centaines par exemple.

En fait, à chaque instant, le trafic peut être décomposé en deux types de flots : des flots contraints ou "goulottés" notés BKD par la suite (pour "bottlenecked") dont le débit en entrée de l'ordonnancement dépasse le débit équitable réalisé par l'ordonnancement, et les autres flots notés NBD (pour "non-bottlenecked") dont le débit en entrée de l'ordonnancement est plus faible que le débit équitable.

EP1478140 divulgue un mécanisme opérant une différentiation implicite, c'est-à-dire sans signalisation spécifique ni réservation de ressource, de la qualité de service, en distinguant les flots BKD et NBD. Les paquets des flots NBD sont traités de façon prioritaire, alors que les flots BKD subissent l'ordonnancement à partage équitable. Ainsi, les flots de type "temps réel" (streaming audio ou vidéo par exemple) dont le débit est relativement faible subissent un délai paquet faible. A l'inverse, les flots de type "données" réalisent le débit maximal compatible avec un objectif de partage.

Cependant, dans le mécanisme proposé par EP1478140, les flots NBD sont momentanément inclus dans la structure de l'ordonnancement lorsqu'ils émettent un paquet. Ceci est nécessaire pour permettre la détection des nouveaux flots BKD, mais a pour effet de requérir une capacité relativement importante pour cette structure par rapport à celle qui est strictement nécessaire pour traiter les flots BKD.

A titre illustratif, l'ordonnancement proposé dans les techniques susmentionnées peut nécessiter la prise en compte de plusieurs centaines de flots à certains instants pour une charge du lien desservi d'environ 90%. Le nombre de flots dépend en réalité des caractéristiques du trafic, notamment du rapport entre le débit du lien et le débit maximal des flots (c'est-à-dire le débit qu'ils pourraient atteindre si le lien était de capacité infinie, compte tenu des autres limitations de débit sur leur chemin). Plus ce rapport est élevé, pour une majorité de flots, plus le nombre de flots NBD est grand. Les flots NBD entrent alors plus souvent dans la structure de l'ordonnancement.

Cet effet implique la nécessité d'utiliser une mémoire importante pour identifier les flots actifs. De plus, il implique une complexité de traitement relativement élevée.

On comprend en outre que la dépendance de la mémoire nécessaire à l'ordonnancement vis-à-vis des caractéristiques de trafic rend le dimensionnement des structures de l'ordonnancement assez peu robuste.

Par ailleurs, l'ordonnancement à partage équitable proposé par EP1478140 prévoit une allocation identique pour tous les flots. Cette limitation peut être gênante dans certaines applications, notamment dans un réseau d'accès où l'on souhaiterait distinguer les utilisateurs selon les conditions prévues dans leur abonnement.

Un but de la présente invention est de limiter les inconvénients des techniques antérieures, rappelés plus haut.

En particulier, un but de l'invention vise à limiter les informations à prendre en compte par l'ordonnancement et la complexité des traitements mis en oeuvre.

Un autre but de l'invention vise à augmenter la robustesse du dimensionnement des structures de l'ordonnancement.

Un autre but de l'invention vise à permettre la prise en compte de conditions particulières pour des flots d'utilisateurs distincts.

L'invention propose ainsi un procédé d'ordonnancement de paquets de données appartenant à des flots, comprenant les étapes suivantes, relativement à chaque nouveau paquet entrant :

/a/ déterminer le flot auquel le paquet appartient, une classe de débit étant associée audit flot ;

/b/ lorsque ledit flot fait partie d'une liste des flots actifs, introduire le paquet dans un mécanisme d'ordonnancement à partage équitable en vue de sa délivrance, le mécanisme d'ordonnancement à partage équitable étant agencé pour délivrer les paquets de chaque flot sensiblement selon un même débit équitable pondéré par la classe de débit associée au flot correspondant ;

/c/ lorsque ledit flot ne fait pas partie de la liste des flots actifs :

- obtenir une estimation de la quantité de données entrantes relativement audit flot sur un intervalle de temps de référence ;

- comparer l'estimation de la quantité de données entrantes relativement audit flot sur l'intervalle de temps de référence et une valeur maximale, l'un au moins parmi l'intervalle de temps de référence et la valeur maximale étant déterminé en fonction d'une estimation du débit équitable ;

- ajouter ledit flot à la liste des flots actifs et introduire le paquet dans le mécanisme d'ordonnancement à partage équitable en vue de sa délivrance, si l'estimation de la quantité de données entrantes relativement audit flot sur l'intervalle de temps de référence surpasse la valeur maximale ; et

- introduire le paquet à la fin d'une file d'attente prioritaire en vue de sa délivrance, dans le cas contraire.

Le mode de mise à jour de la liste des flots actifs permet de s'assurer que cette liste ne contient que des flots de la catégorie BKD. En effet, la comparaison entre l'estimation de la quantité de données entrantes relativement audit flot sur l'intervalle de temps de référence et la valeur maximale permet de déterminer, avant la mise à jour de la liste des flots actifs, si le flot considéré est de type BKD ou NBD. On limite ainsi sensiblement la taille de cette liste, ainsi que sa dépendance vis-à-vis des caractéristiques du trafic. Cette réduction de taille permet en outre de limiter la complexité des traitements à mettre en oeuvre, notamment pour maintenir une liste des flots actifs à jour.

La valeur maximale prise en compte peut dépendre de la classe de débit associée au flot considéré. Elle peut aussi consister en une valeur fixe prédéterminée, en particulier dans le cas où l'estimation de la quantité de données entrantes se limite à un comptage du nombre de paquets entrants appartenant à ce flot.

Une structure de données simple, telle qu'un tableau, peut avantageusement être utilisée pour estimer la quantité de données entrantes relativement audit flot. Dans ce cas, l'obtention de l'estimation de la quantité de données entrantes relativement audit flot comprend la mise à jour, au cours dudit intervalle de temps de référence, d'un champ du tableau dont l'adresse correspond à une fonction d'un identifiant dudit flot, chaque champ du tableau étant remis à zéro au début de l'intervalle de temps de référence. La fonction utilisée est par exemple une fonction de hachage c'est-à-dire une fonction permettant de créer un condensé de l'identifiant dudit flot, avec un degré d'ambiguïté limité.

Le procédé peut en outre comprendre un contrôle d'admission préalable dans lequel on décide si le paquet doit être rejeté ou non avant l'étape /b/, en fonction d'une bande passante disponible et d'un niveau de charge de la file d'attente prioritaire. Un tel contrôle permet d'éviter les situations de congestion.

Le procédé comprend aussi avantageusement la délivrance des paquets dans l'ordre suivant : on délivre d'abord l'ensemble des paquets introduits dans la file d'attente prioritaire, puis on délivre certains au moins des paquets introduits dans le mécanisme d'ordonnancement à partage équitable.

L'invention propose en outre un équipement, tel qu'un gestionnaire de file d'attente dans un routeur par exemple, apte à contribuer à un ordonnancement de paquets de données appartenant à des flots, comprenant, relativement à chaque nouveau paquet entrant :

/a/ des moyens pour déterminer le flot auquel le paquet appartient, une classe de débit étant associée audit flot ;

/b/ des moyens pour introduire le paquet dans un mécanisme d'ordonnancement à partage équitable en vue de sa délivrance, lorsque ledit flot fait partie d'une liste des flots actifs, le mécanisme d'ordonnancement à partage équitable étant agencé pour délivrer les paquets de chaque flot sensiblement selon un même débit équitable pondéré par la classe de débit associée au flot correspondant ;

/c/ des moyens pour, lorsque ledit flot ne fait pas partie de la liste des flots actifs :

- obtenir une estimation de la quantité de données entrantes relativement audit flot sur un intervalle de temps de référence ;

- comparer l'estimation de la quantité de données entrantes relativement audit flot sur l'intervalle de temps de référence et une valeur maximale, l'un au moins parmi l'intervalle de temps de référence et la valeur maximale étant déterminé en fonction d'une estimation du débit équitable ;

- ajouter ledit flot à la liste des flots actifs et introduire le paquet dans le mécanisme d'ordonnancement à partage équitable en vue de sa délivrance, si l'estimation de la quantité de données entrantes relativement audit flot sur l'intervalle de temps de référence surpasse la valeur maximale ; et

- introduire le paquet à la fin d'une file d'attente prioritaire en vue de sa délivrance, dans le cas contraire.

L'invention propose aussi un routeur agencé pour incorporer l'équipement susmentionné.

L'invention propose enfin un produit programme d'ordinateur comprenant des instructions aptes à mettre en oeuvre un ordonnancement de parquets de données appartenant à des flots selon les étapes suivantes, relativement à chaque nouveau paquet entrant, lorsque ledit programme est chargé et exécuté par des moyens informatiques :

/a/ déterminer le flot auquel le paquet appartient, une classe de débit étant associée audit flot ;

/b/ lorsque ledit flot fait partie d'une liste des flots actifs, introduire le paquet dans un mécanisme d'ordonnancement à partage équitable en vue de sa délivrance, le mécanisme d'ordonnancement à partage équitable étant agencé pour délivrer les paquets de chaque flot sensiblement selon un même débit équitable pondéré par la classe de débit associée au flot correspondant ;

/c/ lorsque ledit flot ne fait pas partie de la liste des flots actifs :

- obtenir une estimation de la quantité de données entrantes relativement audit flot sur un intervalle de temps de référence ;

- comparer l'estimation de la quantité de données entrantes relativement audit flot sur l'intervalle de temps de référence et une valeur maximale, l'un au moins parmi l'intervalle de temps de référence et la valeur maximale étant déterminé en fonction d'une estimation du débit équitable ;

- ajouter ledit flot à la liste des flots actifs et introduire le paquet dans le mécanisme d'ordonnancement à partage équitable en vue de sa délivrance, si l'estimation de la quantité de données entrantes relativement audit flot sur l'intervalle de temps de référence surpasse la valeur maximale ; et

- introduire le paquet à la fin d'une file d'attente prioritaire en vue de sa délivrance, dans le cas contraire.

D'autres particularités et avantages de la présente invention apparaîtront dans la description ci-après d'exemples de réalisation non limitatifs, en référence aux dessins annexés, dans lesquels :

- la figure 1 est un schéma illustrant une architecture simplifiée pour l'ordonnancement de paquets ;
- la figure 2 est un schéma illustrant un mode de délivrance des paquets ;
- la figure 3 est un schéma d'une structure de données utilisée pour la détection de nouveaux flots ;

- la figure 4 est un organigramme représentant des étapes principales de l'ordonnancement des paquets à délivrer ;
- la figure 5 est un schéma illustrant une détection de flot BKD ;
- la figure 6 est un exemple de structure d'une liste de flots actifs selon le mécanisme d'ordonnancement DRR ;
- la figure 7 est un organigramme représentant des étapes d'introduction d'un paquet d'un flot actif selon le mécanisme d'ordonnancement DRR ;
- la figure 8 est un organigramme représentant des étapes d'introduction d'un nouveau flot actif selon le mécanisme d'ordonnancement DRR ;
- la figure 9 est un organigramme représentant des étapes de délivrance de paquets selon le mécanisme d'ordonnancement DRR ;
- la figure 10 est un exemple de structure d'une liste de flots actifs selon le mécanisme d'ordonnancement SFQ ;
- la figure 11 est un exemple de structure d'un échéancier selon le mécanisme d'ordonnancement SFQ ;
- la figure 12 est un organigramme représentant des étapes d'introduction d'un paquet d'un flot actif selon le mécanisme d'ordonnancement SFQ ;
- la figure 13 est un organigramme représentant des étapes d'introduction d'un nouveau flot actif selon le mécanisme d'ordonnancement SFQ ;
- la figure 14 est un organigramme représentant des étapes de délivrance de paquets selon le mécanisme d'ordonnancement SFQ.

Principes généraux

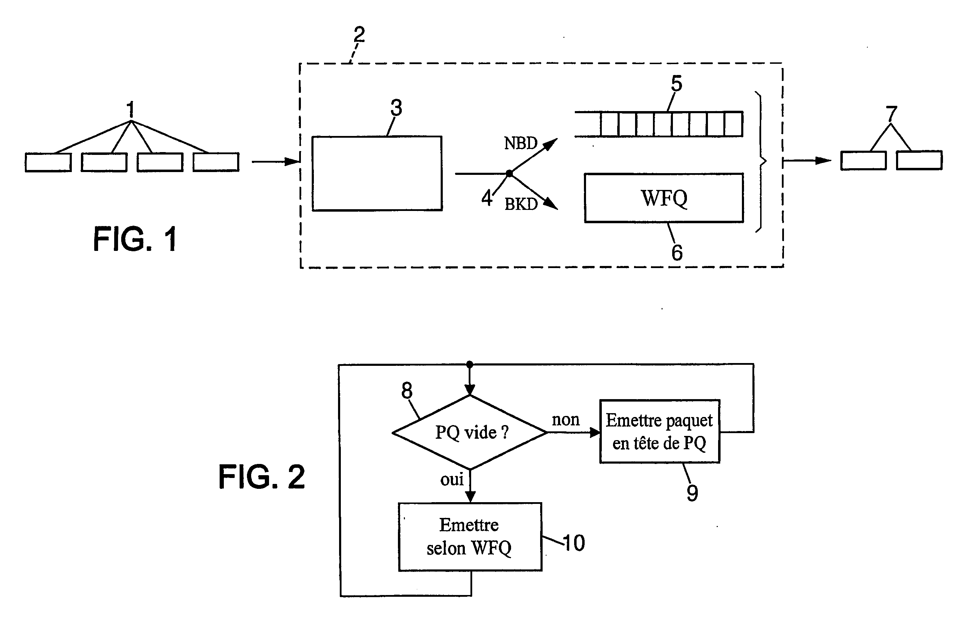

La figure 1 montre schématiquement l'architecture permettant l'ordonnancement de paquets de données entrants dans le système. Le système en question comprend par exemple un routeur comprenant, entre autres éléments, un équipement 2 qui reçoit des paquets entrants 1 et délivre en sortie des paquets 7 correspondant à certains au moins des paquets entrants 1. Ces paquets 7 sont délivrés sur un lien contrôlé par l'équipement 2. Ils sont émis dans un certain ordre déterminé par l'ordonnancement mis en oeuvre par le système.

Comme expliqué en introduction, les paquets 1 considérés appartiennent à des flots. Une distinction est établie entre les flots BKD et les flots NBD. A cet effet, on détecte, à l'arrivée d'un paquet 1 si le flot auquel ce paquet appartient est de type BKD ou NBD (alternative 4 sur la figure 1). Si le paquet considéré appartient à un flot NBD, il est introduit en fin d'une file d'attente prioritaire 5, notée PQ ("Priority Queue") par la suite. Cette file d'attente est par exemple de type FIFO ("First In First Out"). Si, au contraire, le paquet appartient à un flot BKD, il est alors introduit dans un mécanisme d'ordonnancement à partage équitable 6 de type WFQ ("Weighted Fair Queueing"), en vue de sa délivrance.

La figure 2 illustre le mode de délivrance des paquets 7 en sortie de l'ordonnancement. On vérifie tout d'abord l'état d'occupation de la file prioritaire PQ (étape 8). Si PQ contient au moins un paquet en attente, il doit être délivré en priorité (étape 9). Si la file d'attente PQ est de type FIFO, elle est alors vidée en commençant par la tête, c'est-à-dire par les paquets entrés en premier dans la file. En revanche, si PQ est vide, cela signifie que tous les paquets appartenant à des flots NBD ont déjà été délivrés. On délivre alors un ou plusieurs paquets, appartenant à des flots BKD, préalablement introduits dans le mécanisme d'ordonnancement WFQ 6 (étape 10). L'ordre d'émission de ces paquets dépend du mécanisme d'ordonnancement 6 mis en oeuvre. On revient ensuite à la file PQ pour vérifier si elle contient de nouveaux paquets à délivrer. L'instant de retour vers la file PQ dépend également du mécanisme d'ordonnancement 6 mis en oeuvre. Des exemples de tels mécanismes seront détaillés plus loin.

Ainsi, les paquets des flots NBD peuvent être émis avec priorité sans nuire au débit réalisé par les flots BKD. Un tel traitement prioritaire permet en outre de réduire le délai paquet des flots NBD à faible débit, ce qui est avantageux pour beaucoup d'applications de type streaming.

On notera qu'un contrôle d'admission 3 peut être mis en oeuvre, de façon optionnelle, en entrée de l'équipement 2. Un exemple d'un tel mécanisme est le contrôle implicite d'admission décrit dans EP1478140. Il vise à limiter les situations de congestion. A cet effet, on vérifie si la bande passante disponible du lien contrôlé par l'équipement 2 est supérieure à un premier seuil et si la charge due aux paquets mis en file d'attente prioritaire est inférieure à un second seuil. Dans le cas contraire, on n'accepte que les paquets des flots protégés, c'est-à-dire de flots qui sont admis à transmettre. Les autres paquets sont rejetés avant de pouvoir être soumis à l'ordonnancement. On protège ainsi la qualité de service des flots déjà entamés.

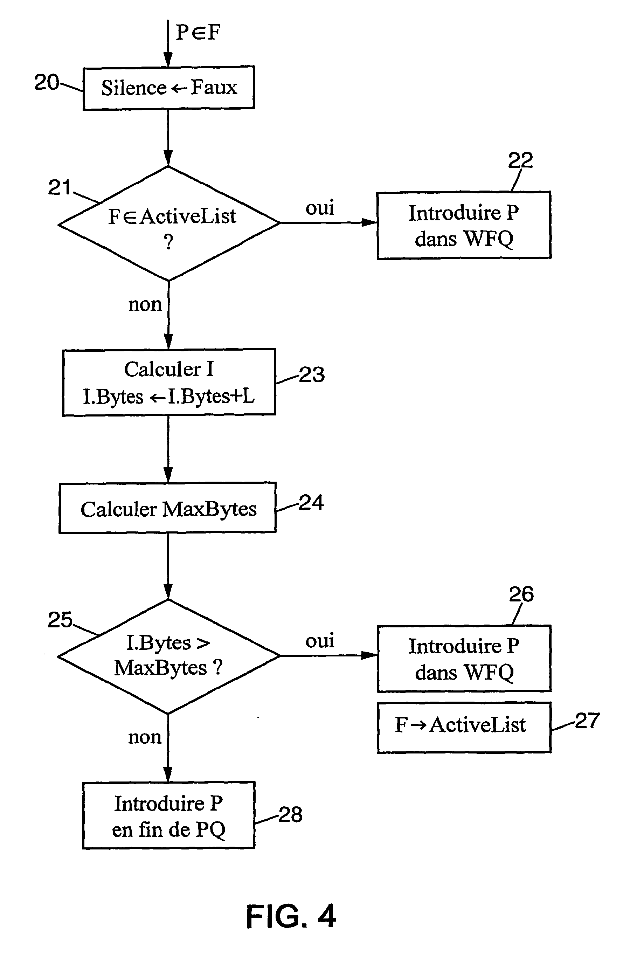

Selon l'invention, seuls les flots actifs de type BKD sont considérés relativement à l'ordonnancement WFQ. Le fonctionnement sera mieux compris à la lumière de la figure 4 qui illustre les principales étapes de l'ordonnancement mises en oeuvre pour chaque nouveau paquet entrant dans le système.

Soit P un paquet entrant de longueur L. Ce paquet appartient à un flot F dont un identifiant peut être déduit de l'en-tête du paquet P par le système considéré (par exemple l'équipement 2 de la figure 1). La longueur L de P est également détectée par le système. A l'arrivée de P dans le système, une variable logique "Silence" peut prendre la valeur "Faux" (étape 20), ce qui signifie qu'il existe, dans le système, au moins un paquet à délivrer. Cette variable sera utilisée pour le calcul du débit équitable relatif au mécanisme d'ordonnancement WFQ, comme cela sera détaillé plus loin.

On vérifie la présence du flot F, par exemple à l'aide de son identifiant, dans une liste ActiveList (étape 21). ActiveList est construite pour comprendre l'ensemble des flots actifs de type BKD uniquement. Une telle liste a donc une taille limitée, notamment parce qu'elle n'inclut pas de flots de type NBD. Le mode de constitution de cette liste sera apparent plus loin.

Si le flot F auquel le paquet P appartient fait déjà partie de ActiveList, ce qui signifie que F est un flot BKD déjà connu comme tel par le système, le paquet P est alors introduit dans le mécanisme d'ordonnancement WFQ, en vue de sa délivrance (étape 22).

Sinon, on estime le débit de F par rapport au débit équitable réalisé à l'instant courant par l'ordonnancement WFQ (étapes 23-25). Si le débit de F est supérieur à une estimation du débit équitable, le flot F est donc un flot de type BKD et il sera ajouté à ActiveList (étape 27). Dans ce cas, le paquet P du flot F est introduit dans le mécanisme d'ordonnancement WFQ en vue de sa délivrance (étape 26).

A l'inverse, si le débit de F est inférieur à l'estimation du débit équitable, cela signifie que F est un flot NBD et il convient alors d'introduire son paquet P à la fin de la file d'attente prioritaire PQ, en vue de sa délivrance (étape 28). On note que, dans ce cas, le flot F, bien qu'ayant un paquet en attente dans le système, n'est pas ajouté à ActiveList. C'est de cette façon qu'on garantit que ActiveList ne contient que des flots actifs de type BKD.

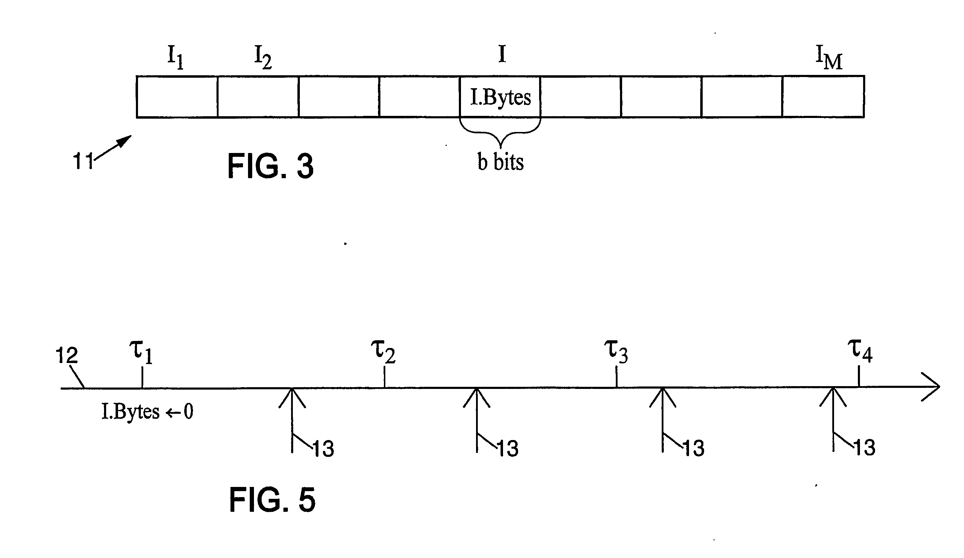

Pour estimer le débit du flot F par rapport au débit équitable réalisé à l'instant courant par l'ordonnancement WFQ, on tire avantageusement profit de la structure de données 11 illustrée sur la figure 3. Cette structure est un tableau comprenant M éléments de b bits chacun, avec M et b entiers. Chaque élément de ce tableau est identifié par une adresse $I_1$, $I_2$, ...I, ..., $I_M$. Ces adresses correspondent par ailleurs à des valeurs obtenues chacune par l'application d'une fonction, par exemple une fonction de hachage, à l'identifiant d'un flot.

Lorsque, dans la succession d'opérations illustrée sur la figure 4, on a identifié le flot F, on calcule la valeur I correspondant à l'application de ladite fonction à l'identifiant de F. Cette valeur permet de retrouver le champ du tableau 11, d'adresse I, afin de mettre à jour la valeur de compteur I.Bytes qui y est stockée (étape 23). Ainsi, le compteur I.Bytes est représentatif de la quantité de données reçue en entrée du système relativement au flot F, pendant un intervalle de temps de référence. Chaque compteur I.Bytes est en effet remis à zéro au début de chaque intervalle de temps de référence.

A l'étape 24 de la figure 4, on calcule par ailleurs le nombre maximal d'octets MaxBytes qu'un flot pourrait émettre dans un intervalle de temps de référence sans être de type BKD.

Dans un exemple de réalisation de l'invention, on choisit les intervalles de temps de référence mentionnés ci-dessus de façon qu'un flot dont la classe de débit est la plus faible soit BKD s'il y émet plus qu'une valeur maximale de MTU octets, par exemple 1500 octets. Ce point sera détaillé plus loin.

Lorsque le mécanisme d'ordonnancement WFQ est du type DRR, MaxBytes peut être calculé comme suit. Si $Q\_i$ est le quantum en octets d'un flot de classe de débit i, on impose $Q\_i \geq$ MTU pour toute classe. Un flot de classe i est supposé BKD si, au cours d'un intervalle de temps de référence, le compteur correspondant dans le tableau 11 dépasse $Q\_i$. On définit donc MaxBytes = $Q\_i$.

Lorsque le mécanisme d'ordonnancement WFQ est du type SFQ, MaxBytes peut être calculé comme suit. Soit $R\_i$ le paramètre de débit des flots de classe i, on impose la condition $R\_1 \geq 1$ pour tout i. Un flot de classe i est supposé BKD si, au cours d'un intervalle de temps de référence, le compteur correspondant dans le tableau 11 dépasse $R\_i$.MTU. On définit donc MaxBytes = $R\_i$.MTU.

Une comparaison des valeurs I.Bytes et MaxBytes obtenues de la façon indiquée ci-dessus (étape 25) permet alors de déterminer si le flot considéré est de type BKD ou NBD.

On note que la classe de débit d'un flot peut être déduite par exemple de champs de l'en-tête de chaque paquet entrant appartenant à ce flot. Par exemple, la classe peut être déduite des adresses IP ou du champ DSCP ("Diffserv Code Point") inclus dans l'en-tête des paquets.

Dans un autre exemple de réalisation, les intervalles de temps de référence sont indépendants du débit équitable réalisé à l'instant courant par l'ordonnancement WFQ. En revanche, à l'étape 25, le compteur I.Bytes est comparé à une valeur maximale MaxBytes qui dépend du débit équitable. Une combinaison des deux exemples de réalisation peut également être envisagée. Dans ce cas, les intervalles de temps de référence et la valeur MaxBytes dépendent chacun du débit équitable.

Pour utiliser au mieux les b bits du compteur I.Bytes, on adapte la valeur de l'unité à la limite MaxBytes du flot concerné. Ainsi, pour un paquet de longueur L, le compteur I.Bytes correspondant serait incrémenté de I = $\lceil[(2^b-1)L$ / MaxBytes$\rceil$ unités, où $\lceil x \rceil$ désigne l'entier immédiatement supérieur ou égal à x. Ainsi, à l'arrivée d'un paquet qui ferait déborder le compteur, on décide que ce flot est BKD.

Une telle décision est parfois erronée. On distingue les erreurs "faux positifs", où un flot est désigné BKD à tort, et les erreurs "faux négatifs", où un flot BKD n'est pas détecté comme tel.

Les erreurs faux positifs peuvent se produire lorsque le résultat de l'application de la fonction de hachage aux identifiants d'au moins deux flots actifs est identique. Il est alors possible que le champ I.Bytes correspondant soit surestimé car il est incrémenté de la quantité de données reçues pour chacun de ces flots dans l'intervalle de temps de référence considéré (voir étape 23). Cela peut conduire le compteur I.Bytes à déborder, si bien que l'un des flots actifs auquel il correspond est considéré à tort comme un flot BKD. On note qu'une telle collision entre deux flots distincts ne conduit à un faux positif que lorsqu'elle survient au cours d'un même intervalle de temps de référence.

Les erreurs faux positifs peuvent aussi se produire lorsque la granularité choisie pour le nombre b de bits des différents champs du tableau 11 est trop faible. Cela conduit en effet à une surestimation du nombre d'octets entrants pour chaque flot. Dans un exemple extrême, lorsque b=1, les compteurs I.Bytes ne peuvent prendre que deux valeurs, 0 ou 1. Ainsi, lorsque dans un intervalle de temps de référence, tel que l'intervalle $[\tau_3;\tau_4]$ de la figure 5, plus d'un paquet 13 d'un flot donné est reçu, le compteur I.Bytes associé à ce flot déborde, provoquant l'identification du flot comme un flot BKD. Pourtant, la quantité de données totale correspondant aux deux paquets 13 reçus dans cet intervalle peut être inférieure à la valeur maximale MaxBytes, par exemple si chacun des paquets 13 reçus contient 500 octets, soit un total de 1000 octets, alors que MaxBytes vaut 1500 octets, une valeur typique de MTU.

Les erreurs faux négatifs peuvent se produire lorsqu'on tarde à reconnaître un flot BKD dont l'arrivée des paquets est mal placée par rapport aux bornes des intervalles de temps de référence, qui correspondent aux instants de réinitialisation des compteurs I.Bytes. Ainsi, dans l'exemple illustré sur la figure 5, des paquets entrants 13 appartenant à un flot sont reçus à raison d'un par intervalle de temps de référence lors des deux premiers intervalles $[\tau_1;\tau_2]$ et $[\tau_2;\tau_3]$ représentés sur l'axe des temps 12. C'est seulement dans l'intervalle suivant $[\tau_3;\tau_4]$ que deux paquets 13 sont détectés, si bien que le flot peut alors être considéré comme étant BKD, alors que le débit d'arrivée de ses paquets n'a pas sensiblement varié sur la période représentée.

On note que la probabilité de faux positifs dépend du choix de la taille de la structure de données de la figure 3. Plus le nombre M de compteurs dans la structure est grand, plus faible est la probabilité que le hachage des identifiants de deux flots distincts coïncide avec la même adresse de compteur. En outre, plus la taille b d'un compteur est grande, plus le nombre d'octets reçus relativement à un flot donné est pris en compte de façon précise.

La probabilité de faux négatifs n'est, quant à elle, significative que pour les flots dont le débit est proche du débit équitable. Les premiers paquets d'un tel flot sont envoyés à la file d'attente PQ, tant que le flot n'est pas identifié comme un flot BKD, ce qui ne nuit guère à l'efficacité de l'ordonnancement.

Comme cela a été évoqué plus haut, le cas particulier b=1 mérite une attention particulière. Dans ce cas en effet, tout flot est considéré comme BKD dès qu'il émet plus d'un seul paquet dans un intervalle de temps de référence, quelle que soit sa classe de débit. Malgré l'imprécision qui en résulte pour la détermination des flots BKD/NBD, ce choix est attractif car il permet d'obtenir une taille très faible pour la structure de données de la figure 3. Il présente en outre une complexité réduite du fait de la non prise en compte de la classe de débit.

On notera que la structure de données qui a été présentée en référence à la figure 3 consiste en une simple structure linéaire de M compteurs, chacun correspondant à l'unique image d'un ensemble d'identifiants de flot. De façon générale, il est possible de réduire la taille de la mémoire nécessaire en adoptant une structure plus complexe.

En particulier, les techniques du filtre de Bloom, décrites dans l'article de B. Bloom, "Space/time tradeoffs in hash coding with allowable errors, Commun. ACM, vol. 13, no. 7, pp. 422-426, July 1970", ou de bitmaps multi-étages décrits dans l'article de C. Estan, G. Varghese, "New directions in traffic measurement and accounting, Proceedings of ACM Sigcomm 2002" font appel à plusieurs fonctions de hachage appliquées à l'identifiant de flot et désignant un ensemble de compteurs. Dans l'application présente, chaque compteur de l'ensemble correspondant à un flot serait mis à jour comme décrit précédemment. La condition BKD serait présumée si tous ces compteurs devaient déborder lors de l'arrivée d'un nouveau paquet.

Mode de réalisation de invention avec DRR

On décline ci-après les principes de l'invention dans un mode de réalisation particulier, dans lequel le mécanisme d'ordonnancement à partage équitable utilisé est le mécanisme connu DRR.

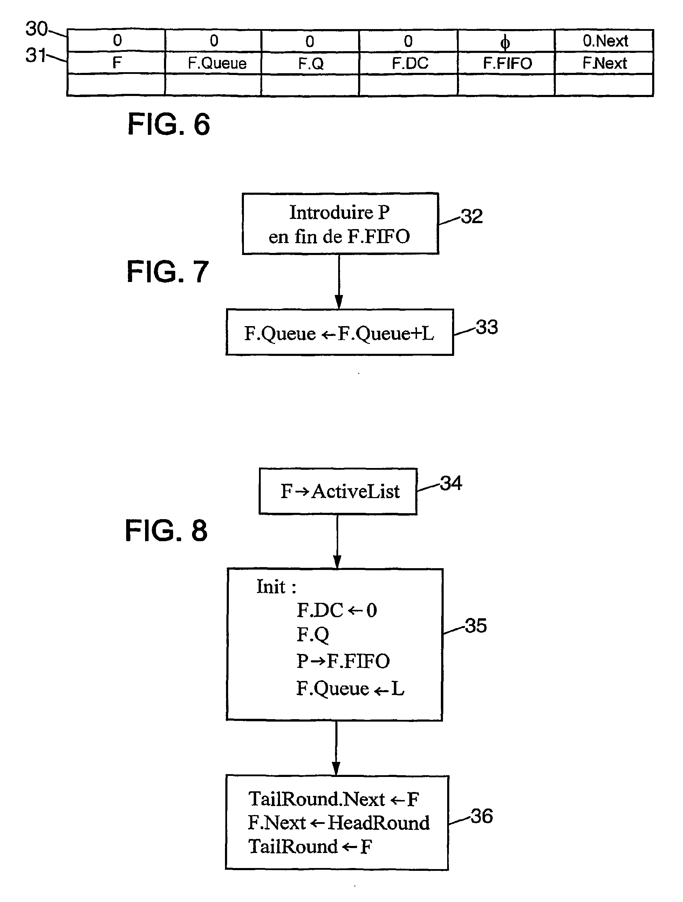

La figure 6 montre une structure possible pour ActiveList. Cette liste comprend une ligne par flot. Chaque ligne 31 contient les données suivantes en colonnes (de la gauche vers la droite sur l'exemple illustré) :

    F : un identifiant du flot ;
    F.Queue : la taille courante, en octets, de la file d'attente relative aux paquets de F ;
    F.Q : le quantum exprimant le nombre d'octets que le flot est autorisé à émettre pendant un cycle de l'algorithme ;
    F.DC : le compteur de déficit du flot ;
    F.FIFO : l'ensemble d'adresses mémoire et de pointeurs permettant d'identifier les paquets du flot dans l'ordre premier arrivé, premier servi ; et
    F.Next : le pointeur vers le prochain flot de la liste devant être servi (l'ensemble des pointeurs définit l'échéancier).

Une entrée spécifique 30, dans ActiveList, est réservée pour un flot fictif appelé flot 0. Ce flot s'inscrit dans l'échéancier et permet de délimiter les cycles : un nouveau cycle de l'algorithme DRR commence après chaque visite du flot 0 (où bien entendu aucun paquet n'est émis).

Pour compléter la définition de l'échéancier, on utilise deux variables globales :

- HeadRound : désigne le flot qui doit être servi en premier, lorsque c'est au tour de l'ordonnancement WFQ d'émettre ; et
- TailRound : désigne le flot encore présent dans ActiveList qui a émis un paquet en dernier ou bien le flot fictif 0 si celui-ci a reçu une visite après cette émission.

La figure 7 illustre les opérations effectuées lors de l'introduction d'un paquet P appartenant à un flot F déjà présent dans ActiveList (ce qui correspond à l'étape 22 de la figure 4), en supposant que la file des paquets n'est pas saturée pour ce flot. Le paquet P est introduit à la fin de la file F.FIFO qui est mise à jour en conséquence (étape 32). La taille courante de la file d'attente relative aux paquets de F est alors augmentée de la longueur L du paquet P (étape 33).

La figure 8 illustre les opérations effectuées lors de l'ajout d'un nouveau flot F dans ActiveList (ce qui correspond à l'étape 27 de la figure 4). Le quantum F.Q correspondant peut se déduire de certains champs de l'entête du paquet entrant appartenant au flot F, comme expliqué plus haut, en appliquant une fonction de classification. Par ailleurs, le déficit F.DC est initialisé à la valeur zéro. La file d'attente F.FIFO prend en compte le paquet P entrant du flot F et la taille courante de la file F.Queue est augmentée de la longueur L du paquet P (étape 35).

On insère ensuite le flot F dans l'échéancier (étape 36). A cet effet, le flot F est considéré comme le dernier flot traité dans le cycle, tandis que le flot suivant F devient le premier à devoir être servi lorsque c'est au tour de l'ordonnancement WFQ d'émettre.

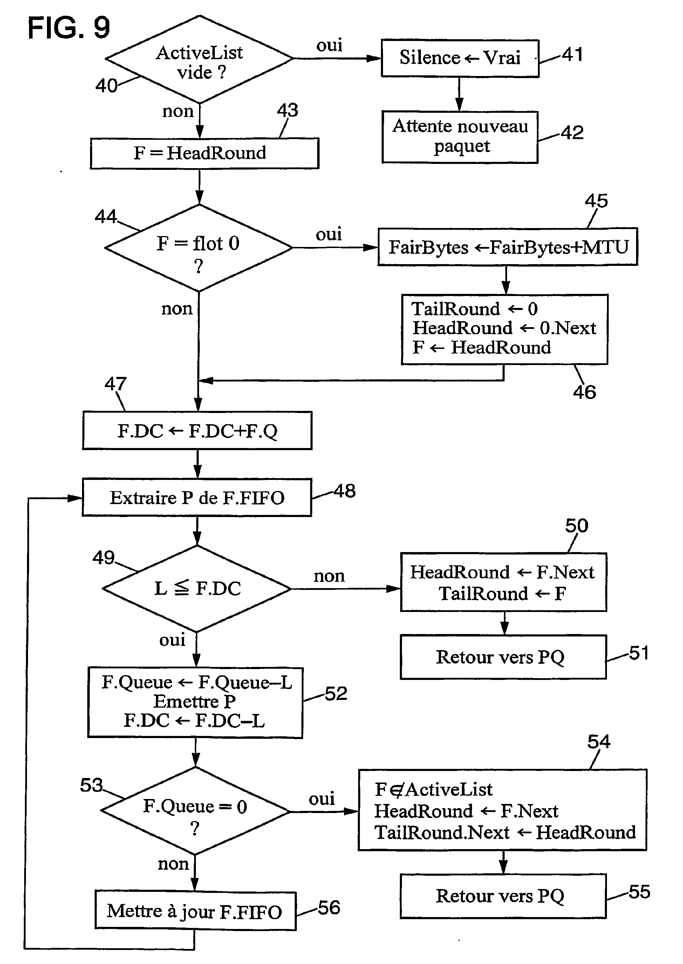

Les principales étapes mises en oeuvre relativement à la délivrance de paquets sont schématisées sur la figure 9. Ces étapes ne sont mises en oeuvre que lorsque la file d'attente prioritaire PQ est vide.

On suppose ci-après que la file PQ n'est revisitée qu'à la fin du service de l'ensemble des paquets représentant le quantum du flot considéré. On notera qu'une autre hypothèse selon laquelle on permettrait le service d'un éventuel paquet présent dans la file PQ entre deux paquets du quantum d'un même flot est également possible.

On vérifie tout d'abord si ActiveList est vide (étape 40). Dans l'affirmative, cela signifie qu'il n'y a aucun paquet à émettre selon l'ordonnancement DRR. Comme par ailleurs, la file PQ est vide, on peut donc régler la variable Silence à la valeur "Vrai" (étape 41), puis se tenir dans l'attente d'un nouveau paquet (étape 42).

Si, au contraire, ActiveList n'est pas vide, on considère le flot F en tête de l'échéancier, qui doit être servi en premier, c'est-à-dire tel que F=HeadRound (étape 43).

On vérifie si ce flot F est le flot 0, c'est-à-dire le flot fictif (étape 44). Dans l'affirmative, on augmente du nombre MTU d'octets la valeur d'un compteur FairBytes qui désigne le nombre d'octets qu'aurait pu émettre le flot fictif s'il s'agissait d'un flot réel de classe de débit la plus faible (étape 45). Le compteur FairBytes est utilisé pour le calcul du débit équitable, comme cela sera détaillé plus loin. On met aussi également à jour les variables TailRound et HeadRound, pour prendre les valeurs 0 et 0.Next respectivement, afin d'indiquer que le flot fictif a été servi et de s'apprêter à servir le flot suivant de ActiveList, qui constitue désormais le prochain flot à servir (étape 46). L'algorithme se poursuit alors avec l'étape 47.

Dans le cas où le flot F n'est pas le flot fictif, on passe également à l'étape 47, dans laquelle on augmente la valeur de déficit F.DC de ce flot de son quantum F.Q.

Puis on extrait un paquet P de la file F.FIFO identifiant l'ensemble des paquets du flot entrés dans le système (étape 48). Ce paquet P est celui arrivé en premier dans cette file et qui se situe donc en tête de F.FIFO.

On compare la longueur L de ce paquet P à la valeur du déficit F.DC du flot F correspondant. Si L>F.DC, il n'est alors pas possible de délivrer ce paquet P et l'on met à jour les valeurs de TailRound et HeadRound pour que le flot suivant soit servi au prochain cycle (étape 50). La file prioritaire PQ est ensuite revisitée (étape 51).

Si L≤F.DC, le paquet P peut être émis. Les variables F.Queue et F.DC sont diminuées de la longueur L de P pour prendre en compte l'émission du paquet P (étape 52).

On vérifie alors la valeur de F.Queue (étape 53). Si elle est égale à zéro, cela signifie que la file d'attente relative aux paquets de F est vide, c'est-à-dire que le flot F n'est plus actif car il n'a plus de paquets en attente de délivrance. Le flot F peut alors être sorti de ActiveList. En outre, ActiveList est mise à jour pour que le flot suivant soit servi au prochain cycle (étape 54). La file prioritaire PQ est ensuite revisitée (étape 55).

Si, au contraire, la valeur de F.Queue est non nulle, la file F.FIFO est mise à jour, de façon à prendre en compte l'émission du paquet P (étape 56). Dans l'hypothèse choisie où l'ensemble du quantum du flot est délivré avant de revisiter la file prioritaire PQ, on retourne ensuite à l'étape 48, en vue d'émettre d'autres paquets pour le flot F considéré.

<u>Mode de réalisation de l'invention avec SFQ</u>

On décline ci-après les principes de l'invention dans un mode de réalisation particulier, dans lequel le mécanisme d'ordonnancement à partage équitable utilisé est le mécanisme connu SFQ.

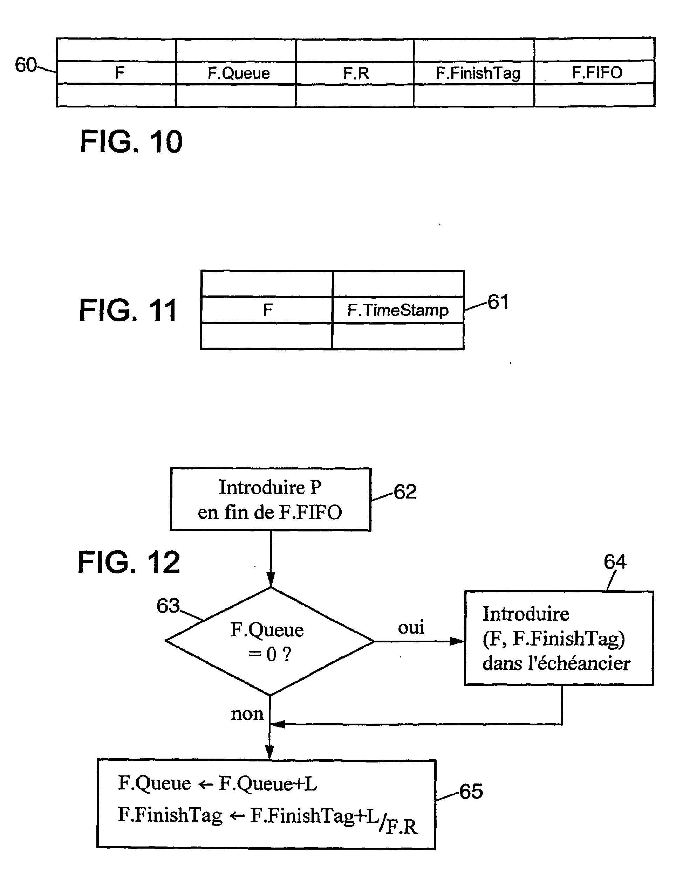

La figure 10 montre une structure possible pour ActiveList. Cette liste comprend une ligne par flot. Chaque ligne 60 contient les données suivantes en colonnes (de la gauche vers la droite sur l'exemple illustré) :

F : un identifiant du flot ;

F.Queue : la taille courante, en octets, de la file d'attente relative aux paquets de F ;

F.R : le paramètre exprimant le débit relatif du flot (on impose sans perte de généralité que F.R $\geq$ 1) ;

F.FinishTag : une variable permettant le calcul de l'estampille des paquets et l'effacement de flots BKD de ActiveList ; et

F.FIFO : l'ensemble d'adresses mémoire et de pointeurs permettant d'identifier les paquets du flot dans l'ordre premier arrivé, premier servi.

La figure 11 montre une structure possible pour un échéancier qui détermine l'ordre d'émission des paquets. A chaque flot F est associée une estampille F.TimeStamp. Les flots sont visités en ordre croissant d'estampille. A chaque visite, selon l'échéancier, un flot émet le paquet qui se trouve en tête de sa file d'attente F.FIFO.

On utilise en outre les deux variables globales :

- VirtualTime : permet le calcul des estampilles ; et

- LastTime : est utilisée pour mesurer les intervalles de temps de référence.

La figure 12 illustre les opérations effectuées lors de l'introduction d'un paquet P appartenant à un flot F déjà présent dans ActiveList (ce qui correspond à l'étape 22 de la figure 4). Le paquet P est introduit à la fin de la file F.FIFO correspondante (étape 62).

Il peut arriver que la file F.FIFO de ce flot soit vide (étape de vérification 63 de la valeur de F.Queue). Si elle l'est, on réinscrit le flot à l'échéancier avec une estampille égale à F.FinishTag (étape 64).

Lorsque F.FIFO n'est pas vide ou une fois le flot réinscrit à l'échéancier, on met à jour la taille courante de la file pour prendre en compte l'ajout du paquet P, ainsi que la variable F.FinishTag (étape 65). La mise à jour de F.FinishTag tient compte de la classe de débit, l'incrément étant inversement proportionnel à F.R.

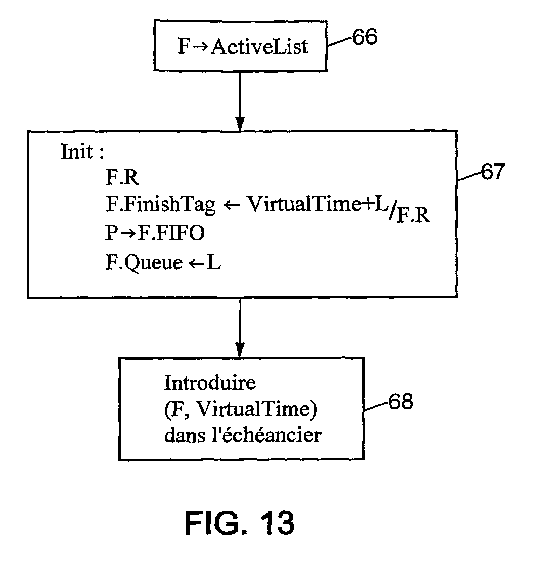

La figure 13 illustre les opérations effectuées lors de l'ajout d'un nouveau flot F dans ActiveList (ce qui correspond à l'étape 27 de la figure 4). Le flot F est ajouté à ActiveList (étape 66). Puis, on initialise les différents champs de ActiveList correspondant à ce flot F, c'est-à-dire F.R, F.FinishTag qui est réglé à la valeur VirtualTime+L/F.R, F.FIFO qui contient le paquet P entrant et F.Queue qui prend la valeur de la longueur L du paquet P (étape 67).

Le flot F, avec une estampille ajustée à la valeur de VirtualTime, est par ailleurs ajouté à l'échéancier (étape 68).

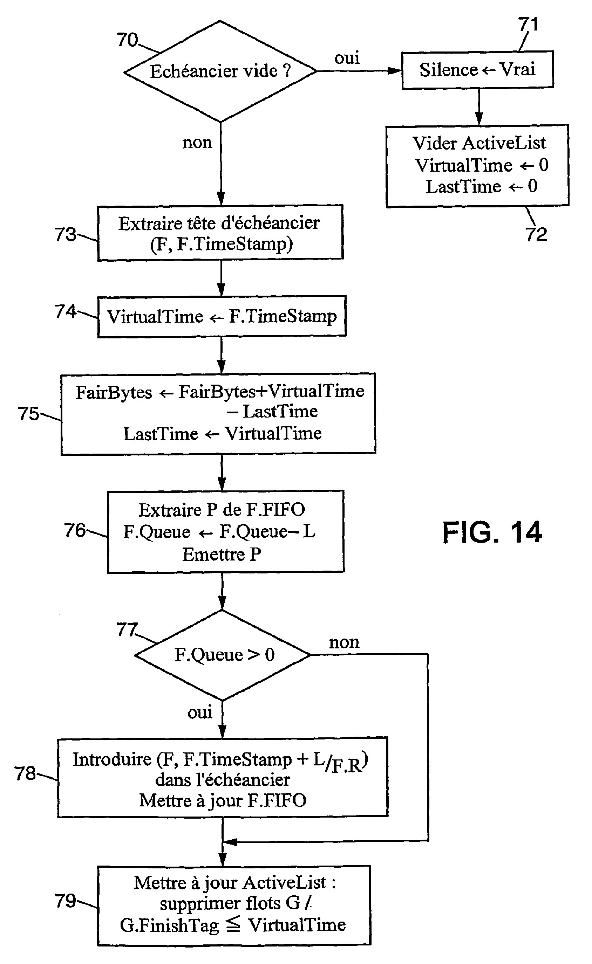

Les principales étapes mises en oeuvre relativement à la délivrance de paquets sont schématisées sur la figure 14. On vérifie tout d'abord si l'échéancier est vide (étape 70). Dans l'affirmative, cela signifie qu'il n'y a aucun paquet à émettre selon l'ordonnancement SFQ. Comme par ailleurs, la file PQ est vide, on peut donc régler la variable Silence à la valeur "Vrai" (étape 71). On vide ensuite ActiveList pour le cas où il y resterait des flots qui ne sont cependant pas actifs, puisqu'ils ne figurent pas dans l'échéancier (étape 72). On peut aussi réinitialiser les variables VirtualTime et LastTime à zéro.

Si l'échéancier est non vide, on extrait la tête de l'échéancier, à savoir le flot F associé à l'estampille F.TimeStamp (étape 73). Puis on règle la variable VirtualTime à la valeur de F.TimeStamp (étape 74).

On met ensuite à jour un compteur FairBytes mesurant la quantité d'octets qu'aurait pu émettre un flot BKD fictif de paramètre de débit R=1 (un octet pour chaque unité de progression du temps virtuel) s'il s'agissait d'un flot réel. On met également à jour LastTime à l'aide de VirtualTime (étape 75).

On extrait ensuite le paquet P qui se trouve en tête de la file F.FIFO, on met à jour la taille courante F.Queue de la file F en lui retranchant la longueur L du paquet P et on émet le paquet P (étape 76).

Puis, on vérifie si la taille F.Queue est positive. Si elle l'est, on réintroduit le flot F dans l'échéancier avec une nouvelle valeur d'estampille réglée à F.TimeStamp+L/F.R. En outre, la file F.FIFO est mise à jour, de façon à prendre en compte l'émission du paquet P (étape 78).

Finalement, on met à jour ActiveList en supprimant tout flot G qui y figure encore alors que G.Finishtag $\leq$ VirtualTime, c'est-à-dire tous les flots qui ne sont donc plus dans la catégorie BKD (étape 79).

Débit équitable et prise en compte pour déterminer les flots BKD

On rappelle que le débit équitable désigne le débit présenté par les paquets de chaque flot BKD en sortie du mécanisme d'ordonnancement à partage équitable (à la classe de débit dudit flot près).

Le débit équitable peut donc être estimé comme le débit qu'obtiendrait un flot fictif qui serait toujours dans l'état BKD et dont le quantum Q vaudrait MTU dans le cas d'un mécanisme DRR ou dont le paramètre de débit R vaudrait 1 dans le cas d'un mécanisme SFQ. L'estimation du débit équitable peut être réalisée selon les principes décrits dans EP1478140.

Le débit équitable sert notamment pour déterminer les intervalles de temps de référence, comme cela sera explicité plus loin.

On rappelle que la variable logique Silence permet de détecter à tout instant si le système est vide ou non. On peut ainsi calculer, à partir de cette variable, la durée totale de silence SilenceTime(t1,t2) dans tout intervalle de temps (t1,t2).

On rappelle en outre que le compteur FairBytes est incrémenté, dans le cas de DRR, à chaque passage par la file du flot 0 (voir figure 9) et, dans le cas de SFQ, chaque fois que le temps virtuel VirtualTime change (voir figure 14). Il permet ainsi de mesurer le nombre d'octets qu'aurait pu émettre un flot fictif BKD.

Soit FairBytes(t) la valeur du compteur FairBytes à l'instant t. On estime le débit équitable moyen DE(t1,t2) au cours d'un intervalle (t1, t2) selon la formule suivante :

$$DE(t1,t2) =$$

$$Max \{SilenceTime(t1,t2).C / (t2-t1) ; (FairBytes(t2)-FairBytes(t1))*8 / (t2-t1)\}$$

où C désigne le débit total offert par le lien considéré.

On comprend que le premier terme de cette formule sera prépondérant en cas de faible charge du système, tandis que le second terme sera prépondérant en cas de charge élevée.

Comme cela a été décrit plus haut, la détermination des intervalles de temps de référence est telle qu'un flot non encore inscrit dans ActiveList doit être détecté comme BKD s'il émet à un débit supérieur à une estimation courante du débit équitable pondérée par le poids nécessaire pour tenir compte de la classe de débit du flot en question.

Une méthode possible pour faire cette estimation est la suivante. On évalue tout d'abord le débit équitable DE(n) à des instants nT, où T est un intervalle fixe (par exemple de 100 ms) et n est un entier, de façon que DE(n) =DE((n-1)T,nT). Puis, on effectue un lissage, par exemple un lissage exponentiel, des évaluations DE(n), c'est-à-dire qu'à chaque instant nT, on remet à jour l'estimation FairRate du débit équitable lissé comme suit :

$$FairRate \leftarrow \alpha \ FairRate + (1-\alpha) \ DE(n), \qquad avec \ 0 \leq \alpha \leq 1.$$

Soit $\tau1$ le début d'un intervalle de temps de référence, tel que celui représenté sur la figure 5. On rappelle qu'un tel instant correspond à une remise à zéro des compteurs I.Bytes contenus dans la structure de données telle qu'illustrée sur la figure 3. L'instant suivant $\tau2$, qui correspond à la fin d'un intervalle de temps de référence (et au début d'un autre), se calcule :

$$\tau2 = \tau1 + MTU * 8 / FairRate$$

où FairRate est l'estimation courante du débit équitable à l'instant $\tau1$.

On définit ainsi la suite des intervalles de temps de référence. Comme cela est apparent à la lumière de ce qui précède, ces intervalles dépendent donc directement du débit équitable réalisé par le mécanisme d'ordonnancement à partage équitable mis en oeuvre.

Le choix de T et de $\alpha$ détermine la réactivité de l'algorithme. T devrait être assez grand pour permettre l'émission d'au moins MTU octets dans un intervalle ((n-1)T, nT) pour tout flot BKD. Plus $\alpha$ est proche de 1, plus les variations à court terme du débit équitable sont estompées. A titre d'exemple, un choix de T=100 ms et $\alpha$=0.9 semble produire une réduction importante du nombre de flots dans ActiveList, ainsi qu'une faible dégradation de performance par rapport aux algorithmes WFQ classiques. Le choix semble par ailleurs peu critique dans une plage assez importante.

Des simulations avec traces de trafic réel mettant en oeuvre un partage équitable sans pondération (Q_i = MTU ou R_i = 1) ont permis d'observer une réduction du nombre maximal de flots dans ActiveList de 540, avec l'algorithme classique SFQ, à seulement 4 selon la présente invention, pour un lien concentrant le trafic d'utilisateurs ADSL (dont le débit par flot est en principe inférieur à 1 Mbps) et chargé à 90%. Ce gain extrême résulte du fait que, dans cet exemple, aucun flot n'est réellement dans la classe BKD. Pour une trace observée sur un lien du réseau de recherche américain Abilene, la réduction au même taux de charge est de 362 à 128 flots. Ces résultats correspondent au choix pour la structure de données comprenant les valeurs I.Bytes d'un bitmap (c'est à dire que b=1). La réduction supplémentaire obtenue avec des compteurs de 8 bits permet d'atteindre 106 flots au lieu de 128 dans le dernier cas par exemple.

De façon générale, l'invention permet de limiter la capacité de l'ordonnancement à une centaine de flots environ, contre plusieurs centaines de flots selon les techniques connues, pour une charge du lien desservi d'environ 90%. Cette performance s'accompagne d'une réduction de la mémoire nécessaire pour la structure de l'ordonnancement et limite en outre sensiblement la complexité des traitements.

De plus, cette capacité est largement indépendante des caractéristiques du trafic et constitue donc un dimensionnement robuste.

On note que l'invention a été plus particulièrement décrite dans les cas particuliers des mécanismes d'ordonnancement à partage équitable DRR et SFQ. Toutefois, on comprendra qu'elle s'applique également à tout autre mécanisme d'ordonnancement à partage équitable, tels qu'un mécanisme à répartition par permutation circulaire, un mécanisme à estampillage, ou autre.

L'invention s'étend également à tout équipement apte à contribuer à un ordonnancement de paquets selon le procédé décrit ci-dessus, tel que l'équipement 2 de la figure 1 par exemple. Elle s'étend aussi à un routeur incorporant un tel équipement.

L'invention s'étend en outre à un programme d'ordinateur comprenant des instructions aptes à mettre en oeuvre le procédé décrit ci-dessus. Un tel programme peut avantageusement être installé et exécuté sur un équipement contribuant à l'ordonnancement de paquets, tel qu'un routeur par exemple.

## Revendications

1. Procédé d'ordonnancement de paquets de données appartenant à des flots, comprenant les étapes suivantes, relativement à chaque nouveau paquet entrant (1;P) :

   /a/ déterminer le flot (F) auquel le paquet (P) appartient, une classe de débit étant associée audit flot ;
   /b/ lorsque ledit flot (F) fait partie d'une liste des flots actifs, introduire le paquet dans un mécanisme d'ordonnancement à partage équitable (6) en vue de sa délivrance, le mécanisme d'ordonnancement à partage équitable étant agencé pour délivrer les paquets de chaque flot sensiblement selon un même débit équitable pondéré par la classe de débit associée au flot correspondant ;
   /c/ lorsque ledit flot (F) ne fait pas partie de la liste des flots actifs :

   - obtenir une estimation de la quantité de données entrantes (I.Bytes) relativement audit flot sur un intervalle de temps de référence ;
   - comparer l'estimation de la quantité de données entrantes relativement audit flot sur l'intervalle de temps de référence et une valeur maximale (MaxBytes), l'un au moins parmi l'intervalle de temps de référence et la valeur maximale étant déterminé en fonction d'une estimation du débit équitable ;
   - ajouter ledit flot à la liste des flots actifs et introduire le paquet (P) dans le mécanisme d'ordonnancement à partage équitable (6) en vue de sa délivrance, si l'estimation de la quantité de données entrantes relativement audit flot sur l'intervalle de temps de référence surpasse la valeur maximale ; et
   - introduire le paquet (P) à la fin d'une file d'attente prioritaire (5) en vue de sa délivrance, dans le cas contraire.

2. Procédé selon la revendication 1, dans lequel ladite valeur maximale (MaxBytes) est une quantité de données dépendant de la classe de débit associée audit flot (F).

3. Procédé selon la revendication 1, dans lequel l'estimation de la quantité de données entrantes (I.Bytes) relativement audit flot (F) comprend une estimation d'un nombre de paquets entrants dudit flot sur l'intervalle de temps de référence et dans lequel ladite valeur maximale (MaxBytes) est un nombre fixe de paquets indépendant de la classe de débit associée audit flot.

4. Procédé selon l'une quelconque des revendications précédentes, dans lequel l'obtention de l'estimation de la quantité de données entrantes (I.Bytes) relativement audit flot (F) comprend la mise à jour, au cours dudit intervalle de temps de référence, d'un champ d'un tableau (11) dont l'adresse (I) correspond à une fonction d'un identifiant dudit flot, chaque champ du tableau étant remis à zéro au début de l'intervalle de temps de référence.

5. Procédé selon l'une quelconque des revendications précédentes, dans lequel l'estimation du débit équitable comprend des évaluations successives du débit équitable et un lissage de certaines au moins desdites évaluations successives.

**6.** Procédé selon l'une quelconque des revendications précédentes, dans lequel le mécanisme d'ordonnancement à partage équitable (6) fait partie de l'un au moins d'un mécanisme à répartition par permutation circulaire et d'un mécanisme à estampillage.

**7.** Procédé selon l'une quelconque des revendications précédentes, comprenant un contrôle d'admission préalable dans lequel on décide si le paquet (P) doit être rejeté ou non avant l'étape /b/, en fonction d'une bande passante disponible et d'un niveau de charge de la file d'attente prioritaire.

**8.** Procédé selon l'une quelconque des revendications précédentes, dans lequel on délivre l'ensemble des paquets introduits dans la file d'attente prioritaire (5), puis on délivre certains au moins des paquets introduits dans le mécanisme d'ordonnancement à partage équitable (6).

**9.** Equipement (2) apte à contribuer à un ordonnancement de paquets de données appartenant à des flots, comprenant, relativement à chaque nouveau paquet entrant (1;P) :

/a/ des moyens pour déterminer le flot (F) auquel le paquet (P) appartient, une classe de débit étant associée audit flot ;
/b/ des moyens pour introduire le paquet dans un mécanisme d'ordonnancement à partage équitable (6) en vue de sa délivrance, lorsque ledit flot (F) fait partie d'une liste des flots actifs, le mécanisme d'ordonnancement à partage équitable étant agencé pour délivrer les paquets de chaque flot sensiblement selon un même débit équitable pondéré par la classe de débit associée au flot correspondant ;
/c/ des moyens pour, lorsque ledit flot (F) ne fait pas partie de la liste des flots actifs :

- obtenir une estimation de la quantité de données entrantes (I.Bytes) relativement audit flot sur un intervalle de temps de référence ;
- comparer l'estimation de la quantité de données entrantes relativement audit flot sur l'intervalle de temps de référence et une valeur maximale (MaxBytes), l'un au moins parmi l'intervalle de temps de référence et la valeur maximale étant déterminé en fonction d'une estimation du débit équitable ;
- ajouter ledit flot à la liste des flots actifs et introduire le paquet (P) dans le mécanisme d'ordonnancement à partage équitable (6) en vue de sa délivrance, si l'estimation de la quantité de données entrantes relativement audit flot sur l'intervalle de temps de référence surpasse la valeur maximale ; et
- introduire le paquet (P) à la fin d'une file d'attente prioritaire (5) en vue de sa délivrance, dans le cas contraire.

**10.** Routeur agencé pour incorporer un équipement selon la revendication 9.

**11.** Produit programme d'ordinateur comprenant des instructions aptes à mettre en oeuvre un ordonnancement de paquets de données appartenant à des flots selon les étapes suivantes, relativement à chaque nouveau paquet entrant (1 ;P), lorsque ledit programme est chargé et exécuté par des moyens informatiques :

/a/ déterminer le flot (F) auquel le paquet (P) appartient, une classe de débit étant associée audit flot ;
/b/ lorsque ledit flot (F) fait partie d'une liste des flots actifs, introduire le paquet dans un mécanisme d'ordonnancement à partage équitable (6) en vue de sa délivrance, le mécanisme d'ordonnancement à partage équitable étant agencé pour délivrer les paquets de chaque flot sensiblement selon un même débit équitable pondéré par la classe de débit associée au flot correspondant ;
/c/ lorsque ledit flot (F) ne fait pas partie de la liste des flots actifs :

- obtenir une estimation de la quantité de données entrantes (I.Bytes) relativement audit flot sur un intervalle de temps de référence ;
- comparer l'estimation de la quantité de données entrantes relativement audit flot sur l'intervalle de temps de référence et une valeur maximale (MaxBytes), l'un au moins parmi l'intervalle de temps de référence et la valeur maximale étant déterminé en fonction d'une estimation du débit équitable ;
- ajouter ledit flot à la liste des flots actifs et introduire le paquet (P) dans le mécanisme d'ordonnancement à partage équitable (6) en vue de sa délivrance, si l'estimation de la quantité de données entrantes relativement audit flot sur l'intervalle de temps de référence surpasse la valeur maximale ; et
- introduire le paquet (P) à la fin d'une file d'attente prioritaire (5) en vue de sa délivrance, dans le cas contraire.

**Claims**

1.  Method for scheduling data packets belonging to streams, comprising the following steps, in relation to each new incoming packet (1;P):

    /a/ the stream (F) to which the packet (P) belongs is determined, a flow rate class being associated with said stream;

    /b/ when said stream (F) is part of a list of active streams, the packet is introduced into a fair sharing scheduling mechanism (6) for the purpose of delivering it, the fair sharing scheduling mechanism being designed to deliver the packets from each stream substantially as per the same fair flow rate weighted by the flow rate class associated with the corresponding stream;

    /c/ when said stream (F) is not part of the list of active streams:

    - an estimate of the quantity of incoming data items (I.Bytes) in relation to said stream over a reference time interval is obtained;
    - the estimate of the quantity of incoming data items in relation to said stream over the reference time interval is compared with a maximum value (MaxBytes), at least either the reference time interval or the maximum value being determined on the basis of an estimate of the fair flow rate;
    - said stream is added to the list of active streams and the packet (P) is introduced into the fair sharing scheduling mechanism (6) for the purpose of delivering it if the estimate of the quantity of incoming data items in relation to said stream over the reference time interval exceeds the maximum value; and
    - otherwise the packet (P) is introduced at the end of a priority queue (5) for the purpose of delivering it.

2.  Method according to Claim 1, in which said maximum value (MaxBytes) is a quantity of data items dependent on the flow rate class associated with said stream (F).

3.  Method according to Claim 1, in which the estimate of the quantity of incoming data items (I.Bytes) in relation to said stream (F) comprises an estimate of a number of incoming packets in said stream over the reference time interval and in which said maximum value (MaxBytes) is a fixed number of packets independent of the flow rate class associated with said stream.

4.  Method according to any one of the preceding claims, in which obtaining the estimate of the quantity of incoming data items (I.Bytes) in relation to said stream (F) comprises updating, in the course of said reference time interval, a field in a table (11) whose address (I) corresponds to a function of an identifier of said stream, each field in the table being reset to zero at the start of the reference time interval.

5.  Method according to any one of the preceding claims, in which estimating the fair flow rate comprises successive evaluations of the fair flow rate and smoothing at least some of said successive evaluations.

6.  Method according to any one of the preceding claims, in which the fair sharing scheduling mechanism (6) is part of at least either a round robin mechanism or a stamping mechanism.

7.  Method according to any one of the preceding claims, comprising a prior admission control in which it is decided whether or not the packet (P) needs to be rejected before step /b/, on the basis of an available bandwidth and a filling level for the priority queue.

8.  Method according to any one of the preceding claims, in which all of the packets introduced into the priority queue (5) are delivered, and then at least some of the packets introduced into the fair sharing scheduling mechanism (6) are delivered.

9.  Piece of equipment (2) capable of being used to organize data packets belonging to streams, comprising, in relation to each new incoming packet (1;P) :

    /a/ means for determining the stream (F) to which the packet (P) belongs, a flow rate class being associated with said stream;

    /b/ means for introducing the packet into a fair sharing scheduling mechanism (6) for the purpose of delivering it, when said stream (F) is part of a list of active streams, the fair sharing scheduling mechanism being designed to deliver the packets from each stream substantially as per the same fair flow rate weighted by the flow rate class associated with the corresponding stream;

/c/ means for, when said stream (F) is not part of the list of active streams:

- obtaining an estimate of the quantity of incoming data items (I.Bytes) in relation to said stream over a reference time interval;
- comparing the estimate of the quantity of incoming data items in relation to said stream over the reference time interval with a maximum value (MaxBytes), at least either the reference time interval or the maximum value being determined on the basis of an estimate of the fair flow rate;
- adding said stream to the list of active streams and introducing the packet (P) into the fair sharing scheduling mechanism (6) for the purpose of delivering it if the estimate of the quantity of incoming data items in relation to said stream over the reference time interval exceeds the maximum value; and
- otherwise introducing the packet (P) at the end of a priority queue (5) for the purpose of delivering it.

**10.** Router designed to incorporate a piece of equipment according to Claim 9.

**11.** Computer program product comprising instructions capable of implementing scheduling of data packets belonging to streams as per the following steps, in relation to each new incoming packet (1;P), when said program is loaded and executed by computer means:

/a/ the stream (F) to which the packet (P) belongs is determined, a flow rate class being associated with said stream;

/b/ when said stream (F) is part of a list of active streams, the packet is introduced into a fair sharing scheduling mechanism (6) for the purpose of delivering it, the fair sharing scheduling mechanism being designed to deliver the packets from each stream substantially as per the same fair flow rate weighted by the flow rate class associated with the corresponding stream;

/c/ when said stream (F) is not part of the list of active streams:

- an estimate of the quantity of incoming data items (I.Bytes) in relation to said stream over a reference time interval is obtained;
- the estimate of the quantity of incoming data items in relation to said stream over the reference time interval is compared with a maximum value (MaxBytes), at least either the reference time interval or the maximum value being determined on the basis of an estimate of the fair flow rate;
- said stream is added to the list of active streams and the packet (P) is introduced into the fair sharing scheduling mechanism (6) for the purpose of delivering it if the estimate of the quantity of incoming data items in relation to said stream over the reference time interval exceeds the maximum value; and
- otherwise the packet (P) is introduced at the end of a priority queue (5) for the purpose of delivering it.

**Patentansprüche**

**1.** Verfahren zur Reihung eines zu Flüssen gehörenden Datenpakets, umfassend die folgenden Schritte in Zusammenhang mit jedem neuen eingehenden Paket (1;P) :

a) Bestimmung des Flusses (F), dem das Paket (P) angehört, wobei eine Ratenklasse dem Fluss zugeordnet ist;

b) wenn der Fluss (F) Teil einer Liste der aktiven Flüsse ist, Einführung des Pakets in einen Reihungsmechanismus mit angemessener Aufteilung (6) im Hinblick auf seine Lieferung, wobei der Reihungsmechanismus mit angemessener Aufteilung derart vorgesehen ist, dass er die Pakete jedes Flusses im Wesentlichen nach einer selben angemessenen Rate liefert, die pro Ratenklasse, die dem entsprechenden Fluss zugeordnet ist, gewichtet ist;

c) wenn der Fluss (F) nicht Teil der Liste der aktiven Flüsse ist:

- Erhalt einer Bewertung der eingehenden Datenmenge (1.Bytes) in Zusammenhang mit dem Fluss über ein Referenzzeitintervall ;
- Vergleich der Bewertung der eingehenden Datenmenge in Zusammenhang mit dem Fluss über ein Referenzzeitintervall und eines Maximalwertes (MaxBytes), wobei mindestens einer unter dem Referenzzeitintervall und dem Maximalwert in Abhängigkeit von einer Bewertung der angemessenen Rate bestimmt wird;
- Hinzufügen des Flusses zur Liste der aktiven Flüsse und Einführen des Pakets (P) in den Reihungsmechanismus mit angemessener Aufteilung (6) im Hinblick auf seine Lieferung, wenn die Bewertung der eingehenden Datenmenge in Zusammenhang mit dem Fluss über ein Referenzzeitintervall den Maximalwert überschreitet; und

- Einführen des Pakets (P) am Ende einer prioritären Warteschlange (5) im Hinblick auf seine Lieferung im umgekehrten Fall.

2. Verfahren nach Anspruch 1, bei dem der Maximalwert (MaxBytes) eine Datenmenge ist, die von der dem Fluss (F) zugeordneten Ratenklasse abhängt.

3. Verfahren nach Anspruch 1, bei dem die Bewertung der eingehenden Datenmenge (1.Bytes) in Zusammenhang mit dem Fluss (F) eine Bewertung einer Anzahl von eingehenden Paketen des Flusses über das Referenzzeitintervall umfasst, und bei dem der Maximalwert (MaxBytes) eine feste Anzahl von Paketen unabhängig von der dem Fluss zugeordneten Ratenklasse ist.

4. Verfahren nach einem der vorhergehenden Ansprüche, bei dem der Erhalt der Bewertung der eingehenden Datenmenge (1.Bytes) in Zusammenhang mit dem Fluss (F) die Aktualisierung eines Feldes einer Tabelle (11) während des Referenzzeitintervalls umfasst, dessen Adresse (1) einer Funktion eines Identifikators des Flusses entspricht, wobei jedes Feld der Tabelle am Anfang des Referenzzeitintervalls zurückgesetzt wird.

5. Verfahren nach einem der vorhergehenden Ansprüche, bei dem die Bewertung der angemessenen Rate aufeinander folgende Bewertungen der angemessenen Rate und ein Glätten zumindest gewisser der aufeinander folgenden Bewertungen umfasst.

6. Verfahren nach einem der vorhergehenden Ansprüche, bei dem der Reihungsmechanismus mit angemessener Aufteilung (6) Teil mindestens eines Verteilungsmechanismus durch kreisförmige Permutation oder eines Eichungsmechanismus ist.

7. Verfahren nach einem der vorhergehenden Ansprüche, umfassend eine vorherige Zulassungskontrolle, bei der entschieden wird, ob das Paket (P) vor dem Schritt b) abgelehnt werden soll oder nicht, in Abhängigkeit von einer verfügbaren Bandbreite und einem Belastungsniveau der prioritären Warteschlange.

8. Verfahren nach einem der vorhergehenden Ansprüche, bei dem die Gesamtheit der in die prioritäre Warteschlange (5) eingeführten Pakete geliefert wird, dann zumindest gewisse der in den Reihungsmechanismus mit angemessener Aufteilung (6) eingeführten Pakete geliefert werden.

9. Ausrüstung (2), die geeignet ist, zu einer Reihung von Flüssen angehörenden Datenpaketen beizutragen, umfassend in Zusammenhang mit jedem neuen eingehenden Paket (1;P):

a) Mittel zur Bestimmung des Flusses (F), dem das Paket (P) angehört, wobei dem Fluss eine Ratenklasse zugeordnet ist;

b) wenn der Fluss (F) Teil einer Liste der aktiven Flüsse ist, Mittel zur Einführung des Pakets in einen Reihungsmechanismus mit angemessener Aufteilung (6) im Hinblick auf seine Lieferung, wobei der Reihungsmechanismus mit angemessener Aufteilung derart vorgesehen ist, dass er die Pakete jedes Flusses im Wesentlichen nach einer selben angemessenen Rate liefert, die pro Ratenklasse, die dem entsprechenden Fluss zugeordnet ist, gewichtet ist;

c) wenn der Fluss (F) nicht Teil der Liste der aktiven Flüsse ist, Mittel für:

- den Erhalt einer Bewertung der eingehenden Datenmenge (1.Bytes) in Zusammenhang mit dem Fluss über ein Referenzzeitintervall;
- den Vergleich der Bewertung der eingehenden Datenmenge in Zusammenhang mit dem Fluss über ein Referenzzeitintervall und eines Maximalwertes (MaxBytes), wobei mindestens einer unter dem Referenzzeitintervall und dem Maximalwert in Abhängigkeit von einer Bewertung der angemessenen Rate bestimmt wird;
- das Hinzufügen des Flusses zur Liste der aktiven Flüsse und das Einführen des Pakets (P) in den Reihungsmechanismus mit angemessener Aufteilung (6) im Hinblick auf seine Lieferung, wenn die Bewertung der eingehenden Datenmenge in Zusammenhang mit dem Fluss über ein Referenzzeitintervall den Maximalwert überschreitet; und
- das Einführen des Pakets (P) am Ende einer prioritären Warteschlange (5) im Hinblick auf seine Lieferung im umgekehrten Fall.

**10.** Router, der derart vorgesehen ist, dass er eine Ausrüstung nach Anspruch 9 integriert.

**11.** Computerprogrammprodukt, umfassend Befehle, die geeignet sind, eine Reihung von Flüssen angehörenden Datenpaketen nach folgenden Schritten in Zusammenhang mit jedem neuen eingehenden Paket (1;P) vorzunehmen, wenn das Programm durch Informatikmittel geladen und ausgeführt wird:

a) Bestimmung des Flusses (F), dem das Paket (P) angehört, wobei dem Fluss eine Ratenklasse zugeordnet ist;
b) wenn der Fluss (F) Teil einer Liste der aktiven Flüsse ist, Einführung des Pakets in einen Reihungsmechanismus mit angemessener Aufteilung (6) im Hinblick auf seine Lieferung, wobei der Reihungsmechanismus mit angemessener Aufteilung derart vorgesehen ist, dass er die Pakete jedes Flusses im Wesentlichen nach einer selben angemessenen Rate liefert, die pro Ratenklasse, die dem entsprechenden Fluss zugeordnet ist, gewichtet ist;
c) wenn der Fluss (F) nicht Teil der Liste der aktiven Flüsse ist:

- Erhalt einer Bewertung der eingehenden Datenmenge (1.Bytes) in Zusammenhang mit dem Fluss über ein Referenzzeitintervall;
- Vergleich der Bewertung der eingehenden Datenmenge im Zusammenhang mit dem Fluss über ein Referenzzeitintervall und eines Maximalwertes (MaxBytes), wobei mindestens einer unter dem Referenzzeitintervall und dem Maximalwert in Abhängigkeit von einer Bewertung der angemessenen Rate bestimmt wird;
- Hinzufügen des Flusses zur Liste der aktiven Flüsse und Einführen des Pakets (P) in den Reihungsmechanismus mit angemessener Aufteilung (6) im Hinblick auf seine Lieferung, wenn die Bewertung der eingehenden Datenmenge in Zusammenhang mit dem Fluss über ein Referenzzeitintervall den Maximalwert überschreitet; und
- Einführen des Pakets (P) am Ende einer prioritären Warteschlange (5) im Hinblick auf seine Lieferung im umgekehrten Fall.

**FIG. 1**

**FIG. 2**

EP 1 878 180 B1

EP 1 878 180 B1

$I_1$   $I_2$   $I$   $I_M$

I.Bytes

11

**FIG. 3**

b bits

12   $\tau_1$   $\tau_2$   $\tau_3$   $\tau_4$

I.Bytes ← 0

13   13   13   13

**FIG. 5**

P∈F

20 — Silence ← Faux

21 — F∈ActiveList ? — oui → Introduire P dans WFQ — 22

non

Calculer I
I.Bytes ← I.Bytes+L — 23

Calculer MaxBytes — 24

25 — I.Bytes > MaxBytes ? — oui → Introduire P dans WFQ — 26

F→ActiveList — 27

non

Introduire P en fin de PQ — 28

# FIG. 4

| 30 | 0 | 0 | 0 | 0 | φ | 0.Next |
|---|---|---|---|---|---|---|
| 31 | F | F.Queue | F.Q | F.DC | F.FIFO | F.Next |
| | | | | | | |

**FIG. 6**

**FIG. 7**

```
Introduire P
en fin de F.FIFO          32
```

```
F.Queue ←F.Queue+L        33
```

**FIG. 8**

```
F→ActiveList        34
```

```
Init :
     F.DC ← 0
     F.Q
     P→F.FIFO                35
     F.Queue ←L
```

```
TailRound.Next ←F
F.Next ←HeadRound        36
TailRound ←F
```

# FIG. 9

ActiveList vide ? —40

oui → Silence ← Vrai —41

↓

Attente nouveau paquet —42

non ↓

F = HeadRound —43

↓

44— F = flot 0 ?

oui → FairBytes ←FairBytes+MTU —45

↓

TailRound ← 0
HeadRound ← 0.Next
F ← HeadRound —46

non ↓

47— F.DC ← F.DC+F.Q

↓

Extraire P de F.FIFO —48

↓

49— L ≦ F.DC

non → HeadRound ← F.Next
TailRound ← F —50

↓

Retour vers PQ —51

oui ↓

F.Queue ← F.Queue–L
Emettre P
F.DC ← F.DC–L —52

↓

53— F.Queue = 0 ?

oui → F ∉ ActiveList
HeadRound ← F.Next
TailRound.Next ← HeadRound —54

↓

Retour vers PQ —55

non ↓

Mettre à jour F.FIFO —56

| | F | F.Queue | F.R | F.FinishTag | F.FIFO |
|---|---|---|---|---|---|
| 60 | | | | | |

**FIG. 10**

**FIG. 11**

| | F | F.TimeStamp |
|---|---|---|
| | | 61 |

**FIG. 12**

Introduire P
en fin de F.FIFO — 62

F.Queue
= 0 ? — 63

oui →

Introduire
(F, F.FinishTag)
dans l'échéancier — 64

non

F.Queue ← F.Queue+L

F.FinishTag ← F.FinishTag+L$/_{F.R}$ — 65

F→ActiveList —66

Init :
  F.R
  F.FinishTag ← VirtualTime+L/$_{F.R}$
  P→F.FIFO
  F.Queue ←L

—67

Introduire
(F, VirtualTime)
dans l'échéancier

—68

## FIG. 13

70. Echéancier vide ? — oui → 71. Silence ← Vrai

72. Vider ActiveList
VirtualTime ← 0
LastTime ← 0

non

73. Extraire tête d'échéancier
(F, F.TimeStamp)

74. VirtualTime ← F.TimeStamp

75. FairBytes ← FairBytes+VirtualTime
− LastTime
LastTime ← VirtualTime

76. Extraire P de F.FIFO
F.Queue ← F.Queue− L
Emettre P

**FIG. 14**

77. F.Queue > 0 — non

oui

78. Introduire (F, F.TimeStamp + $L/_{F.R}$)
dans l'échéancier
Mettre à jour F.FIFO

79. Mettre à jour ActiveList :
supprimer flots G /
G.FinishTag ≦ VirtualTime

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1478140 A

**Littérature non-brevet citée dans la description**

- **SHREEDAR ; VARGHESE.** efficient fair queuing using Deficit Round Robin. *IEEE/ACM Transactions on Networking,* Juin 1996, vol. 4 (3), 375-385
- **GOYAL ; VIN ; CHENG.** Start-time fair queueing: A scheduling algorithm for integrated services packet switching networks. *IEEE/ACM ToN,* Octobre 1997, vol. 5 (5
- Space/time tradeoffs in hash coding with allowable errors. **B. BLOOM.** Commun. ACM, Juillet 1970, vol. 13, 422-426
- **C. ESTAN ; G. VARGHESE.** New directions in traffic measurement and accounting. *Proceedings of ACM Sigcomm,* 2002